# Europäisches Patentamt
# European Patent Office
# Office européen des brevets

(19)

(11) Veröffentlichungsnummer: **0 103 726**
**B1**

(12)

# EUROPÄISCHE PATENTSCHRIFT

(45) Veröffentlichungstag der Patentschrift:
**15.10.86**

(51) Int. Cl.⁴: **E 05 F 15/00**

(21) Anmeldenummer: **83107761.5**

(22) Anmeldetag: **06.08.83**

(54) **Sicherheitsleiste.**

(30) Priorität: **13.09.82 CH 5417/82**

(43) Veröffentlichungstag der Anmeldung:
**28.03.84 Patentblatt 84/13**

(45) Bekanntmachung des Hinweises auf die Patenterteilung:
**15.10.86 Patentblatt 86/42**

(84) Benannte Vertragsstaaten:
**DE FR GB IT**

(56) Entgegenhaltungen:
**DE-A-2 917 797**
**FR-A-2 135 922**

(73) Patentinhaber: **INVENTIO AG, Seestrasse 55, CH-6052 Hergiswil NW (CH)**

(72) Erfinder: **Iseli, Jacob, Dr.- Ing., Ländestrasse 18, CH- 5200 Windisch (CH)**
Erfinder: **Pribnow, Hans Hermann, Dipl.- Ing., General- Guisan 47, CH- 5415 Nussbaumen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft eine Sicherheitsleiste, die entlang der Stoss- und Schliesskanten automatisch bewegbarer Einrichtungen angeordnet ist, wobei die Sicherheitsleiste eine elektrische Schalteinrichtung aufweist, die aus einer Vielzahl Kontaktelementen besteht, welche in einem elastischen, in Längsrichtung vorgespannten Schlauch aneinandergereiht angeordnet sind, so dass die Kontaktelemente in Ruhestellung unter der Einwirkung der Vorspannung des Schlauches an ihren Kontaktstellen zusammengedrückt sind.

Derartige Sicherheitsleisten haben den Zweck, bei automatisch arbeitenden Einrichtungen, wie beispielsweise fahrerlosen Transportfahrzeugen für die Flurförderung oder automatischen Fahrzeugtüren, bei Berührung mit einem Hindernis den jeweiligen Antrieb abzuschalten bzw. einen Bremsvorgang auszulösen.

Bekannt sind Schaltleisten, Kontaktmatten und ähnliche Einrichtungen, die im Prinzip aus zwei in einem Abstand voneinander elastisch gehaltenen elektrischen Leitern in Form von Metallbändern, Drähten usw. bestehen, welche bei Auftreffen auf ein Hindernis gegeneinandergedrückt werden, wobei in einem Steuerstromkreis ein kurzschlussartiger Anstieg des Stromes hervorgerufen wird.

Bei einer derartigen, mit der DE-A- 27 19 438 bekannt gewordenen Sicherheitseinrichtung für die Schliesskanten von automatisch betätigten Fahrzeugtüren ist ein sich über die gesamte Kante erstreckender Signalgeber vorgesehen, der zwei bandförmige, elektrische Leiter besitzt, die an einem elastisch verformbaren Isolierkörper im Ruhezustand in einem bestimmten Abstand gehalten werden. Die Leiter sind im Bereich ihres einen Endes mit einer Spannungsquelle und einem Antriebssteuergerät und im Bereich ihres anderen Endes über einen Messwiderstand miteinander verbunden, wodurch ein Ruhestromkreis gebildet wird. Wird nun der Signalgeber an irgend einer Stelle seines Längsbereiches zusammengedrückt, so kommen die beiden Leiter miteinander in Berührung, was eine Änderung des Widerstandes im Ruhestromkreis zur Folge hat, wobei beispielsweise mittels eines Relais der Antrieb der Fahrzeugtür stillgesetzt wird.

Bei vorstehend beschriebener Sicherheitseinrichtung kann es passieren, dass wegen Korrosion und Verunreinigungen keine Kontaktgabe erfolgt, so dass der Antrieb nicht abgeschaltet wird. Da das den Antrieb abschaltende Schaltgerät bei Zunahme des Ruhestromes aktiviert wird, ist es möglich, dass beispielsweise im Falle eines defekten Relais die Abschaltung ebenfalls nicht erfolgen kann.

Mit der FR-A- 2 135 922 ist eine Sicherheitseinrichtung der eingangs genannten Art bekannt geworden, bei der zwischen dem Fensterrahmen und der Fensterscheibe einer Kraftfahrzeugtür ein Kontaktgeber angeordnet ist, der aus einem elastischen, in Längsrichtung vorgespannten Schlauch besteht, in welchem aneinandergereihte Kugeln als Kontaktelemente angeordnet sind. Bei Einwirkung einer Querkraft auf den Kontaktgeber soll der Schlauch an der betreffenden Stelle einen Keil bilden, der sich zwischen zwei Kugeln schieben und diese zwecks Auslösung eines Signals auseinanderdrücken soll. Die Keilbildung ist jedoch nicht gewährleistet, wenn eine linienförmige, sich über mehrere Kugeln erstreckende, oder eine punktförmige an der Kugelmitte angreifende Querkraft auftritt.

Die der Erfindung zugrunde liegende Aufgabe beteht darin, zwecks Behebung vorstehend erwähnter Nachteile die Sicherheitsleiste derart auszubilden, dass der Kontaktunterbruch bei Einwirkung sowohl von punktförmigen als auch von linienförmigen an beliebigen Stellen der Sicherheitsleiste auftretenden Kräften einwandfrei gewährleistet ist. Zur Lösung dieser Aufgabe schlägt die Erfindung Kontaktelemente vor, die aus einem zylindrischen Isolierkörper bestehen, in dem ein metallischer Kontaktstift eingebettet ist, dessen Enden auf beiden Seiten des zylindrischen Isolierkörpers um den gleichen Betrag aus diesem herausragen. Bei Einwirkung einer äusseren Kraft wird die Schalteinrichtung gebogen, so dass die Kontaktelemente gegeneinander eine Kippbewegung ausführen, die Kanten der zylindrischen Isolierkörper sich berühren und der Kontakt unterbrochen wird.

Der mit der Erfindung erzielte Vorteil liegt darin, dass der Kontaktunterbruch bei Einwirkung sowohl von punktförmigen als auch von linienförmigen an beliebigen Stellen der Sicherheitsleiste auftretenden Kräften einwandfrei gewährleistet ist. Ein weiterer Vorteil ist darin zu sehen, dass durch die Wahl der Verhältnisse von Länge und Durchmesser der Kontaktelemente der Eindrückweg bestimmt werden kann.

Im folgenden wird die Erfindung an Hand eines auf der Zeichnung dargestellten Ausführungsbeispieles näher erläutert. Es zeigen:

Fig. 1 einen Längsschnitt einer elektrischen Schalteinrichtung der erfindungsgemässen Sicherheitsleiste in Ruhestellung,

Fig. 2 einen Längsschnitt der elektrischen Schalteinrichtung der Sicherheitsleiste in einer Arbeitsstellung,

Fig. 3 einen Querschnitt der Sicherheitsleiste und

Fig. 4 einen Querschnitt eines Einbaubeispieles der Sicherheitsleiste.

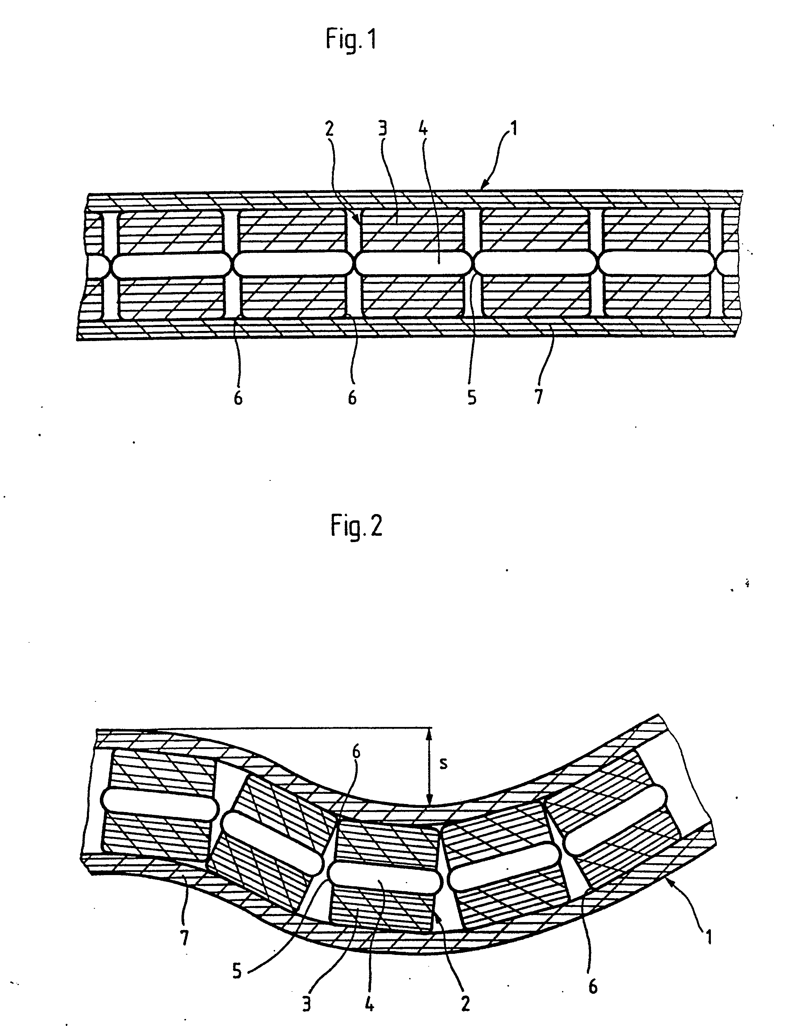

In den Fig. 1 und 2 ist mit 1 eine elektrische Schalteinrichtung für eine Sicherheitsleiste bezeichnet, wie sie beispielsweise als Auffahrsicherung für fahrerlose Transportfahrzeuge für Flurförderanlagen verwendet werden kann. Die elektrische Schalteinrichtung 1 weist eine Vielzahl von gleichartigen Kontaktelementen 2 auf, die aus einem zylindrischen Isolierkörper 3 und einem in diesen eingebetteten Kontaktstift 4 mit abgerundeten Enden bestehen. Die abgerundeten, Kontaktstellen 5 bildenden Enden des Kontaktstiftes 4 ragen auf beiden Seiten des Isolierkörpers 3 um den gleichen Betrag aus diesem heraus. Mit 6 sind die Kanten der Isolierkörper 3 bezeichnet, die mit Abrundungen versehen sind. Die Kontaktelemente 2 sind aneinandergereiht in einem aus einem elastisch verformbaren Material bestehenden, in seiner Längsrichtung vorgespannten Schlauch 7 angeordnet.

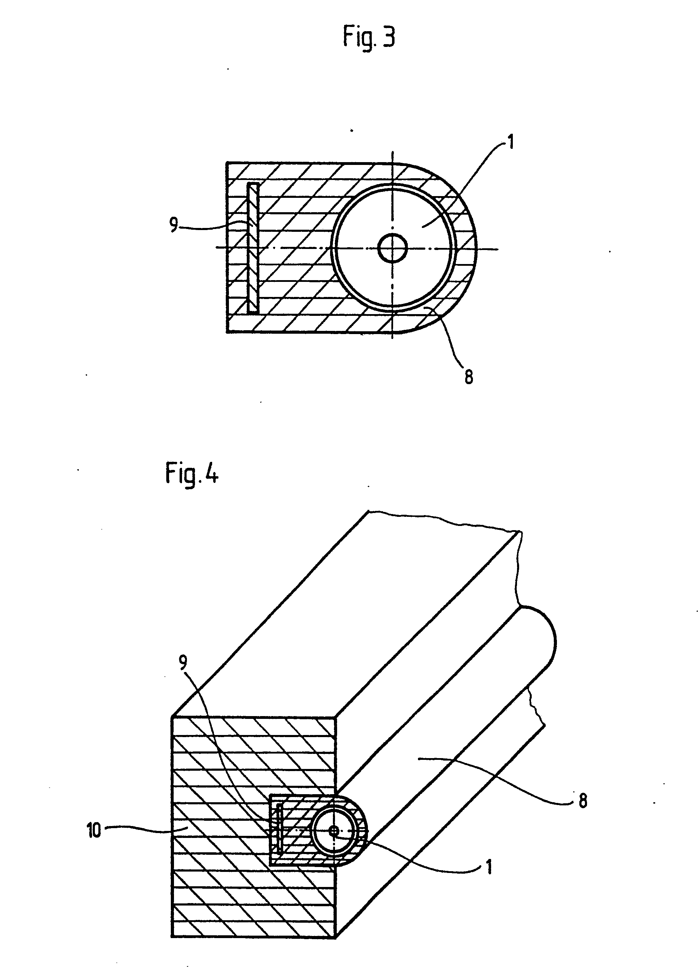

Gemäss den Fig. 3 und 4 ist die elektrische Schalteinrichtung 1 in einem aus einem elastisch verformbaren Material bestehenden Profil 8 eingebettet. Zwecks Verstärkung ist eine parallel zur elektrischen Schalteinrichtung 1 verlaufende Blattfeder 9 vorgesehen, die ebenfalls im Profil 8 eingebettet ist. Bei der vorstehend erwähnten Verwendung als Auffahrsicherung kann die Sicherheitsleiste 1, 8, 9 beispielsweise in einen aus Schaumstoff bestehenden Träger 10 eingesetzt werden, der mit dem fahrerlosen Transportfahrzeug verbunden ist.

Die vorstehend beschriebene Sicherheitsleiste arbeitet wie folgt:

In einer Ruhestellung (Fig. 1) werden die Kontaktelemente 2 unter der Einwirkung der Vorspannung des Schlauches 7 an ihren Kontaktstellen 5 zusammengedrückt, wobei in einem nicht dargestellten Steuerstromkreis die Wicklung eines Schaltgerätes an Spannung liegt und ein Kontakt desselben den Antrieb des Transportfahrzeuges eingeschaltet hält. Bei Auffahren auf ein Hindernis und Eindrücken der Sicherheitsleiste um einen Betrag s (Fig. 2) berühren sich die Kanten 6 der Isolierkörper 3, so dass die Kontaktelemente 2 gegeneinander eine Kippbewegung ausführen und der Kontakt unterbrochen wird. Hierbei fällt die Spannung am Schaltgerät auf Null ab, so dass dessen Kontakt öffnet und der Antrieb abgeschaltet wird. Nach Beseitigung des Hindernisses bewirkt die Elastizität des Schlauches 7 eine Rückkehr der Sicherheitsleiste in die Ruhestellung, wobei der Kontakt zwischen den Kontaktelementen 2 wieder hergestellt und der Antrieb des Transportfahrzeuges eingeschaltet wird.

Der Betrag s des Eindrückweges, bei dem die Kontaktstellen 5 sich voneinander abheben, kann durch die Wahl geeigneter Abmessungen der Kontaktelemente 2 bestimmt werden, wobei das Verhältnis Länge zu Durchmesser massgebend ist. Wird die Sicherheitsleiste im Bogen verlegt, so hängt der zu erreichende Radius ebenfalls von diesem Verhältnis ab.

Anstatt die Kontaktelemente 2 und den Schlauch 7 zylindrisch auszubilden, kann auch ein anderer Querschnitt, wie beispielsweise quadratisch, gewählt werden.

## Patentansprüche

1. Sicherheitsleiste, die entlang der Stoss- oder Schliesskanten automatisch bewegbarer Einrichtungen angeordnet ist, wobei die Sicherheitsleiste eine elektrische Schalteinrichtung (1) aufweist, die aus einer Vielzahl Kontaktelementen (2) besteht, welche in einem elastischen, in Längsrichtung vorgespannten Schlauch (7) aneinandergereiht angeordnet sind, so dass die Kontaktelemente (2) in Ruhestellung unter der Einwirkung der Vorspannung des Schlauches (7) an ihren Kontaktstellen (5) zusammengedrückt sind, dadurch gekennzeichnet, dass die Kontaktelemente (2) aus einem zylindrischen Isolierkörper (3) bestehen, in dem ein metallischer Kontaktstift (4) eingebettet ist, desse Enden auf beiden Seiten des zylindrischen Isolierkörpers (3) um den gleichen Betrag aus diesem herausragen, wobei unter Einwirkung einer äusseren Kraft die Schalteinrichtung (1) gebogen wird, so dass die Kontaktelemente (2) gegeneinander eine Kippbewegung ausführen, die Kanten (6) der zylindrischen Isolierkörper (3) sich berühren und der Kontakt unterbrochen wird.

2. Sicherheitsleiste nach Patentanspruch 1, dadurch gekennzeichnet, dass ein aus elastisch verformbarem Material bestehendes Profil (8) vorgesehen ist, in welchem die elektrische Schalteinrichtung (1) und eine der Verstärkung dienende Blattfeder (9) eingebettet sind.

## Claims

1. Safety edge, arranged along the shock-absorbing or closing edges of automatically movable contrivances, whereby this safety edge contains an electric switching arrangement (1) comprising a plurality of contact elements (2) which are disposed in series in an elastic, in its length prestressed tube (7) so that the contact elements (2), when in normal inoperative position are pressed together at their contact points (5) by the action of the pre-stressing of the tube (7), characterized thereby, that the contact elements (2) are composed of a substantially cylindrical insulating body (3), in which there is embedded a metal contact rod (4), whose opposite ends on both sides of the cylindrical insulating body (3) are projecting from it by the same amount, whereby under the action of an external force the switching arrangement (1) is being bended, so that the contact elements (2) perform a rocking movement against one another, the edges (6) of the cylindrical insulating body (3) touch one another and the contact is being interrupted.

2. Safety edge as defined in claim 1, characterized thereby, that there is provided a profile (8) composed of elastically deformable material, in which are embedded the electric switching arrangement (1) and a leafspring (9) for the purpose of reinforcement.

## Revendications

1. Bordure de sécurité qui est disposée au long des bords de poussée et des bords de fermeture d'installations capables d'être mues automatiquement, ladite bordure comportant un dispositif de commande électrique (1) composé d'une pluralité d'éléments de contact (2) disposés l'un à la suite de l'autre dans un élément tubulaire flexible (7) élastique précontraint en direction longitudinale, de sorte qu'en position de repos les éléments de contact (2) sont poussés l'un contre l'autre à leurs emplacements de contact (5) sous l'influence de la précontrainte de l'élément tubulaire flexible (7), caractérisée en ce que les éléments de contact (2) consistent en des corps isolants cylindriques (3) dans chacun desquels est insérée une tige de contact métallique (4) dont les extrémités font saillie d'une même quantité des deux côtés du corps isolant cylindrique (3), et en ce que, sous l'influence d'une force extérieure, le dispositif de commande électrique (1) est courbé, de sorte que les éléments de contact (2) exécutent un mouvement de basculement l'un par rapport à l'autre, les bords (6) des corps isolants (3) se touchent et le contact est interrompu.

2. Bordure de sécurité selon la revendication 1, caractérisée en ce qu'il est prévu un profilé (8) en matière élastiquement déformable dans lequel sont insérés le dispositif de commande électrique (1) et un ressort à lame (9) de renforcement.

0 103 726

Fig. 1

Fig. 2

Fig. 3

Fig. 4